Europäisches Patentamt

European Patent Office

Office européen des brevets

(19)

(11) Numéro de publication: **0 200 618**

**A1**

(12) ## DEMANDE DE BREVET EUROPEEN

(21) Numéro de dépôt: 86400769.5

(51) Int. Cl.4: **B60R 13/06**

(22) Date de dépôt: 10.04.86

(30) Priorité: **10.04.85 FR 8505357**

(43) Date de publication de la demande:
**10.12.86 Bulletin 86/45**

(84) Etats contractants désignés:
**DE FR GB IT SE**

(71) Demandeur: **HUTCHINSON**
**2 rue Balzac**
**F-75008 Paris(FR)**

(72) Inventeur: **Saint-Louis-Augustin, Louis Guy**
**4, rue Carnot**
**F-45200 Montargis(FR)**
Inventeur: **Phalip, Patricia Annick**
**Résidence du Parc 26, rue Duchesne Rabier**
**F-45200 Montargis(FR)**

(74) Mandataire: **Orès, Bernard et al**
**Cabinet ORES 6, avenue de Messine**
**F-75008 Paris(FR)**

(54) **Dispositif à surfaces de glissement à faible coefficient de frottement et procédé pour abaisser le coefficient de frottement.**

(57) Procédé pour abaisser le coefficient de friction entre un premier et un deuxième dispositif en mouvement relatif de glissement l'un par rapport à l'autre, et notamment réalisés en des matériaux de base constitués par des élastomères ou des matières plastiques et en verre, respectivement, lequel procédé est du type consistant à réaliser, au moins en surface, au moins la ou les parties dudit premier dispositif qui vient ou qui viennent en contact avec ledit deuxième dispositif en un matériau polymère ayant un faible coefficient de friction.

Le procédé est caractérisé en ce que la ou les surfaces de glissement dudit premier dispositif est ou sont obtenue(s) par incorporation dans la masse de ce premier dispositif d'une proportion appropriée dudit matériau polymère à faible coefficient de friction et par migration successive de ce matériau polymère vers la surface extérieure du premier dispositif.

Application aux industries de l'automobile et du bâtiment.

EP 0 200 618 A1

# DISPOSITIF A SURFACES DE GLISSEMENT A FAIBLE COEFFICIENT DE FROTTEMENT ET PROCEDE POUR ABAISSER LE COEFFICIENT DE FROTTEMENT.

La présente invention est relative à un dispositif à faible coefficient de frottement, notamment constitué par un joint d'étanchéité, par rapport à un deuxième dispositif lorsque entre ces deux dispositifs s'établit un mouvement relatif de glissement.

Dans le cas particulier, mais non limitatif, de joints d'étanchéité notamment en élastomères, pour rendre ces derniers "glissants", à savoir pour réduire le coefficient de frottement d'une ou plusieurs surfaces par rapport à un autre dispositif, notamment en verre, la solution généralement utilisée actuellement consiste à déposer par projection électrostatique une couche de poils ou de fibres courtes d'un tissu approprié sur la surface préalablement rendue visqueuse d'un support, notamment constitué par un joint en latex de caoutchouc, en polychlorure de vinyle ou en une matière thermoplastique appropriée ou encore en un élastomère, après quoi on gélifie ou on vulcanise.

Le joint ainsi obtenu est appelé joint "floqué".

Or, ce procédé de l'Art antérieur nécessite une maîtrise complexe des différents paramètres physico-chimiques, liés notamment aux technologies utilisées qui ont trait aux polymères - (élastomères) et aux fibres.

La présente invention s'est en conséquence donné pour but de pourvoir à un procédé pour rendre glissante au moins une partie d'un dispositif, destiné à venir en contact avec un autre dispositif par mouvement relatif de glissement, qui répond mieux aux nécessités de la pratique que les procédés visant au même but antérieurement connus, notamment en ce que le procédé selon l'invention ne demande pas la maîtrise de plusieurs technologies, sa mise en oeuvre faisant en fait appel aux seules techniques utilisées dans le domaine des matières plastiques ou des caoutchoucs, ce qui réduit sensiblement les coûts par rapport à l'Art antérieur.

La présente invention a également pour but un dispositif à faible coefficient de friction obtenu à l'aide du procédé selon l'invention.

La présente invention a pour objet un procédé pour abaisser le coefficient de friction entre un premier et un deuxième dispositifs en mouvement relatif de glissement l'un par rapport à l'autre, et notamment réalisés en des matériaux de base constitués par des élastomères ou matières plastiques et en verre, respectivement, ledit procédé étant du type consistant à réaliser, au moins en surface, au moins la ou les parties dudit premier dispositif qui vient ou qui viennent en contact avec ledit deuxième dispositif en un matériau polymère ayant un faible coefficient de friction, lequel procédé est caractérisé en ce que la ou les surfaces de glissement dudit premier dispositif est ou sont obtenue(s) par incorporation dans la masse de ce premier dispositif d'une proportion appropriée dudit matériau polymère à faible coefficient de friction, et par migration successive de ce matériau polymère vers la surface extérieure du premier dispositif, ce dernier étant mis en forme par tous moyens appropriés, tels que moulage, extrusion ou autre, à partir d'un mélange constituée par une matrice élastomère ou plastomère, correspondant audit matériau de base de ce premier dispositif, et par ladite proportion de matériau polymère à faible coefficient de friction.

Selon un mode de réalisation avantageux du procédé conforme à l'invention, ledit matériau polymère à faible coefficient de friction est constitué par un matériau ayant des propriétés auto-lubrifiantes.

Selon un autre mode de réalisation avantageux du procédé conforme à l'invention, le matériau polymère aux propriétés auto-lubrifiantes est constituée par du polyéthylène du type dit à haute masse moléculaire.

Selon un autre mode de réalisation avantageux du procédé conforme à l'invention, le matériau polymère aux propriétés auto-lubrifiantes est constitué par des polyoléfines, réticulables ou non.

La présente invention a également pour objet un dispositif notamment réalisé en des matériaux de base constitués par des élastomères ou des matières plastiques, destiné à venir en contact avec un deuxième dispositif, notamment réalisé en verre, par l'action d'un mouvement relatif de l'un par rapport à l'autre, le premier dispositif étant du type présentant au moins la ou les parties venant en contact avec ledit deuxième dispositif réalisée ou réalisées, au moins en surface, en un matériau polymère ayant un faible coefficient de friction, lequel premier dispositif est rendu glissant à l'aide du procédé selon l'invention.

Outre les disositions qui précèdent, l'invention comprend encore d'autres dispositions, qui ressortiront de la description qui va suivre.

L'invention sera mieux comprise à l'aide du complément de description qui va suivre, qui se réfère au dessin annexé dans lequel :

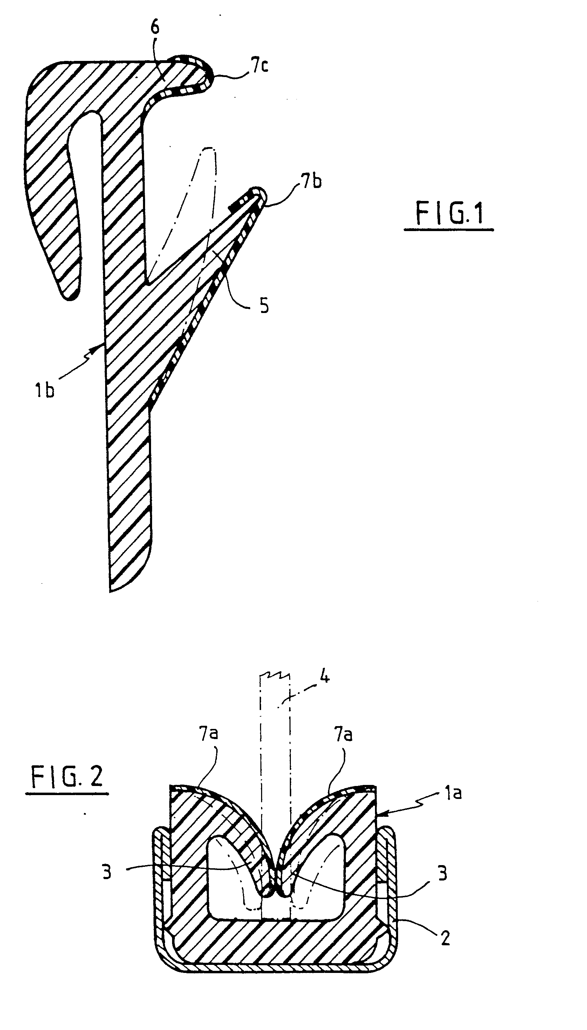

-les figures 1 et 2 représentent des vues en section des portions inférieure et supérieure, respectivement, d'un joint d'étanchéité classique utilisé dans la portière d'un véhicule automobile, dont les lèvres de glissement sont rendues glissantes par rapport à la vitre ouvrante à l'aide de procédés également classiques.

Dans le but de mettre au point un joint "glissant" non "floqué" ayant un coefficient de frottement ou friction faible, notamment par rapport au verre, et, de toutes façons, inférieur au coefficient de frottement d'un joint "floqué" classique dans les mêmes conditions d'utilisation, la Demanderesse a effectué des mesures de coefficient de friction $\mu$ avec différents matériaux, dont les valeurs ont été comparées à celles d'un joint en élastomère "floqué" classique, qui a été pris comme référence.

Les mesures ont été réalisées suivant la norme ASTM D 1894, à l'aide d'un dynamomètre à mâchoires, inférieure et supérieure, connu des techniciens en la matière.

Ledit coefficient de friction $\mu$ est donné par le rapport entre la force F de traction appliqué à un échantillon du matériau à tester, qui est disposé sur une vitre, et le poids P appliqué sur l'échantillon, à savoir :

$$\mu = \frac{F}{P}.$$

Or, la mesure du coefficient de friction d'un joint "floqué" classique a donné pour $\mu$ la valeur $\mu_1 \cong 0,59$.

En ce qui concerne les tests effectués en réalisant des échantillons à l'aide de mélanges à base d'élastomères et matières plastiques ou matières thermoplastiques ayant un caractère élastique, seulement le polybutylène téréphtalate a donné un coefficient de friction $\mu$ inférieur, mais de peu, à celui du joint "floqué" susdit, à savoir un coefficient $\mu \cong 0.52$.

En ce qui concerne l'emploi de vernis déposés, notamment par pulvérisation sur une plaque de E.P.D.M., et constitués en particulier par des vernis à base de polyuréthane, de "Téflon" en solution et de silicones, aucun vernis n'a donné pour $\mu$ de valeurs inférieures à 0,59.

En ce qui concerne l'emploi de films, notamment de "Téflon", de polyéthylène du type dit de haute masse moléculaire et de polyéthylène greffé acide acrylique, ainsi que de polyoléfines - (réticulables ou non), pratiquement tous les films essayés ont présenté de l'intérêt, étant donné qu'on a obtenu un coefficient de friction compris entre environ 0.21 et 0,45. Cependant, du fait de leur médiocre résistance à l'abrasion, ainsi que de leur coût élevé, les polymères fluorés ont été écartés, dans ce sens que la préférence a été donnée au polyéthylène dit de haute masse moléculaire (le coefficient $\mu$ correspondant étant compris entre 0,26 et 0,29) et aux polyoléfines.

De ce point de vue, il y a lieu de souligner l'existence de rubans préadhérisés de "Téflon" et de polyéthylène dit de haute masse moléculaire, utilisés comme surface anti-friction.

En outre, on sait que le polyéthylène dit de très haute masse moléculaire est utilisé pour la fabrication de surfaces glissantes en raison de ses propriétés auto-lubrifiantes et de sa bonne résistance à l'abrasion ; toutefois, sa mise en oeuvre fait appel à des techniques différentes de celles utilisées pour la mise en oeuvre des matières plastiques et donc il sort du cadre de la présente invention.

Une fois effectué le choix du matériau donnant un coefficient de friction $\mu$ inférieur à celui d'un joint floqué classique, à savoir une fois que la préférence a été donnée au polyéthylène dit de haute masse moléculaire et aux polyoléfines, on a effectué des essais d'application de ce polyéthylène et de ces polyoléfines sur différents supports, et en particulier sur l'E.P.D.M., pour évaluer leur adhérence sur les différents supports.

Cette deuxième catégorie d'essais a consisté à confectionner des éprouvettes par déposition du polyéthylène (sous forme de granulés ou de ruban) et des polyoléfines, sur une plaque d'élastomère vulcanisé -qui peut être enduite ou non d'une fine couche de "holt melt" (à savoir, de colle thermoplastique déposée à chaud) -et à mettre, pendant un temps approprié, sous presse l'ensemble ainsi confectionné entre deux feuilles d'aluminium, et ce dans des conditions bien déterminées de température et de pression.

Les valeurs d'adhérence ont été mesurées suivant la norme NF T 46-008 concernant le test de pelage à angle plat, pour lequel on juge -pour qu'il soit satisfaisant - qu'il est nécessaire d'avoir une valeur supérieure ou égale à 20 Ncm$^{-1}$.

Or, des valeurs d'adhérence très satisfaisantes de ce point de vue ont été obtenues par moulage direct du polyéthylène sur l'E.P.D.M. et, en outre, on a pu vérifier que l'utilisation d'un adhésif "hot melt" du type susdit est défavorable. Egalement bons ont été les résultats avec les polyoléfines.

La figure 1 représente la configuration classique d'un joint d'étanchéité dans la partie basse de la portière d'un véhicule automobile qui est incorporée dans la carcasse métallique de cette portière, tandis que la figure 2 représente la configuration également classique du joint d'étanchéité dans la partie haute de la portière.

La portion supérieure 1a du joint d'étanchéité - (cf. la figure 2), qui présente en section une forme en U , est encastrée à l'intérieur du cadre métallique 2 de ladite portière (non représentée) et est pourvue de deux lèvres flexibles 3 entre lesquelles glisse la vitre 4. En pointillé on a représenté la position des lèvres 3 lorsque la vitre 4 s'engage entre ces dernières.

Conformément aux enseignements de l'Art antérieur, on peut appliquer sur la surface des lèvres 3 destinée à venir en contact avec la vitre 4, une couche 7a de polyéthylène à haute masse moléculaire ou de polyoléfines, réticulables ou non, pour assurer le faible coefficient de friction indiqué plus haut.

En ce qui concerne la portion inférieure 1b du joint d'étanchéité (cf. la figure 1), celle-ci aussi peut présenter les deux lèvres latérales flexibles 5 et 6 revêtues par deux couches 7b, 7c de polyéthylène à haute masse moléculaire ou de polyoléfines, réticulables ou non. En pointillé on a représenté la position des lèvres 5 et 6 lors du glissement de la vitre. Bien entendu, il est également possible d'appliquer les couches 7 a, 7b, 7c de polyéthylène à haute masse moléculaire ou de polyoléfines, réticulables ou non, par d'autres procédés classiques, tels que le trempage, la coextrusion, la pulvérisation. On peut aussi coller un film mince en ces matériaux sur le matériau de base du joint d'étanchéité.

Or, contrairement à la technique actuelle -qui consiste, en particulier, à appliquer sur un matériau de base (à partir duquel est réalisé un joint d'étanchéité pour glaces coulissantes) une couche d'un matériau polymère à faible coefficient de frottement -la présente invention propose d'incorporer une proportion appropriée d'un tel matériau polymère dans ledit matériau de base, lors de la mise en forme par moulage du profilé constituant ledit joint d'étanchéité : l'apparition à la surface de ce joint du matériau à faible coefficient de frottement se fait par migration vers la surface externe du joint moulé. De cette manière, on obtient un joint d'étanchéité pour glaces coulissantes qui présente une durée de vie meilleure par rapport aux joints existants en raison du fait que le matériau à faible coefficient de frottement est intégré au matériau de base.

Bien entendu, sur la base des nombreux et coûteux essais effectués par la Demanderesse, on a utilisé comme matériaux polymères à faible coefficient de frottement, le polyéthylène à haute masse moléculaire et les polyoléfines, réticulables ou non. Les charges principales de polyéthylène à haute masse moléculaire ou de polyoléfines peuvent coopérer avec des charges secondaires, notamment en P.T.F.E. ou autres.

Il va de soi que l'invention peut être appliquée non seulement dans l'industrie automobile - (notamment -outre l'application susdite à une vitre ouvrante d'automobile -également pour la réalisation d'un toit ouvrant d'automobile, de la jonction entre capot moteur et coffre ainsi que d'un balai d'essuie-glaces),mais aussi dans l'industrie du bâtiment, en particulier pour réaliser des fenêtres coulissantes.

Ainsi que cela ressort de ce qui précède, l'invention ne se limite nullement à ceux de ses modes de mise en oeuvre, de réalisation et d'application qui viennent d'être décrits de façon plus explicite ; elle en embrasse, au contraire,toutes les variantes qui peuvent venir à l'esprit du technicien en la matière, sans s'écarter du cadre, ni de la portée, de la présente invention.

**Revendications**

1. -Procédé pour abaisser le coefficient de friction entre un premier et un deuxième dispositif en mouvement relatif de glissement l'un par rapport à l'autre,et notamment réalisés en des matériaux de base constitués par des élastomères ou des matières plastiques et en verre, respectivement, ledit procédé étant du type consistant à réaliser, au moins en surface, au moins la ou les parties dudit premier dispositif qui vient ou qui viennent en contact avec ledit deuxième dispositif en un matériau polymère ayant un faible coefficient de friction, lequel procédé est caractérisé en ce que la ou les surfaces de glissement dudit premier dispositif est ou sont obtenue(s) par incorporation dans la masse de ce premier dispositif d'une proportion appropriée dudit matériau polymère à faible coefficient de friction et par migration successive de ce matériau polymère vers la surface extérieure du premier dispositif, ce dernier étant mis en forme par tous moyens appropriés, tels que moulage, extrusion ou autre, à partir d'un mélange constitué par une matrice élastomère ou plastomère, correspondant audit matériau de base de ce premier dispositif, et par ladite proportion de matériau polymère à faible coefficient de friction.

2. -Procédé selon la revendication 1, caractérisé en ce que ledit matériau polymère à faible coefficient de friction est constitué par au moins un matériau ayant des propriétés auto-lubrifiantes.

3. -Procédé selon la revendication 2, caractérisé en ce que le matériau polymère aux propriétés auto-lubrifiantes est constitué par du polyéthylène du type dit à haute masse moléculaire.

4. -Procédé selon la revendication 2, caractérisé en ce que le matériau polymère aux propriétés auto-lubrifiantes est constitué par des polyoléfines, réticulables ou non.

5. -Procédé selon l'une quelconque des revendications 3 ou 4, caractérisé en ce que le polyéthylène à haute masse moléculaire ou les polyoléfines coopèrent avec une charge supplémentaire de polytétrafluoréthylène.

6. -Dispositif (1 a ou 1b), notamment réalisé en des matériaux de base constitués par des élastomères ou des matières plastiques, destiné à venir en contact avec un deuxième dispositif (4), notamment réalisé en verre, par l'action d'un mouvement relatif de l'un par rapport à l'autre, le premier dispositif - (1a ou 1b) étant du type présentant au moins la ou les parties (3, 5, 6) venant en contact avec ledit deuxième dispositif (4) réalisée ou réalisées, au moins en surface, en un matériau polymère ayant un faible coefficient de friction, lequel premier dispositif (1 a ou 1b) est caractérisé en ce qu'il comporte dans sa masse une proportion appropriée dudit matériau à faible coefficient de friction qui, lors du mélange avec ledit matériau de base élastomère ou plastomère, apparait à la surface extérieure du premier dispositif, rendant cette dernière glissante.

7. -Dispositif selon la revendication 6, caractérisé en ce que ledit matériau polymère à faible coefficient de friction est constitué par un matériau ayant des propriétés auto-lubrifiantes.

8. -Dispositif selon la revendication 7, caractérisé en ce que le matériau polymère aux propriétés auto-lubrifiantes est constitué par du polyéthylène du type dit à haute masse moléculaire.

9. -Dispositif selon la revendication 7, caractérisé en ce que le matériau polymère aux propriétés auto-lubrifiantes est constitué par des polyoléfines, réticulables ou non.

10.-Dispositif selon l'une quelconque des revendications 8 et 9, caractérisé en ce que le polyéthylène à haute masse moléculaire ou les polyoléfines coopèrent avec une charge supplémentaire de polytétrafluoréthylène.

11. -Dispositif selon l'une quelconque des revendications 6 à 10, caractérisé en ce que le matériau de base dans lequel ce dispositif est réalisé est choisi dans le groupe comprenant : l'E.P.D.M. (éthylène - propylène -diène -monomère), les élastomères d'autre type que l'E.P.D.M., les matières thermoplastiques-élastomères, ainsi que les matières thermoplastiques.

6

7c

7b

5

1b

FIG.1

4

7a

7a

1a

FIG.2

3

3

2

## DOCUMENTS CONSIDERES COMME PERTINENTS

| Categorie | Citation du document avec indication, en cas de besoin des parties pertinentes | Revendication concernee | CLASSEMENT DE LA DEMANDE (Int Cl.4) |
|---|---|---|---|
| A | GB-A-2 109 042 (DRAFTEX) <br> * Page 1, lignes 80-104; revendication 1 * | 1,6 | B 60 R 13/06 |
| A | FR-A-1 601 412 (POLYMER CORP.) | . | |
| A | EP-A-0 040 336 (S.M.A.E.) | | |

DOMAINES TECHNIQUES RECHERCHES (Int Cl.4)

B 60 R

Le présent rapport de recherche a ete etabli pour toutes les revendications

| Lieu de la recherche | Date d'achevement de la recherche | Examinateur |
|---|---|---|
| LA HAYE | 06-06-1986 | VALLE,D. |